# EUROPEAN PATENT SPECIFICATION

(11) **EP 3 904 612 B1**
(45) Date of publication and mention of the grant of the patent: **25.10.2023**
(21) Application number: 21166808.2
(22) Date of filing: 02.04.2021
(51) Int. Cl.: E02F 9/26, G01S 13/88

(54) **METHOD AND SYSTEM FOR GENERATING EARTHMOVING PRESCRIPTIONS**
VERFAHREN UND SYSTEM ZUR ERZEUGUNG VON ERDBEWEGUNGSVORGABEN
PROCÉDÉ ET SYSTÈME DE GÉNÉRATION DE PRESCRIPTIONS DE TERRASSEMENT

(30) Priority: 03.04.2020 US 202016839232
(43) Date of publication of application: 03.11.2021
(73) Proprietor: CNH Industrial Italia S.p.A., 10156 Torino (IT)
(72) Inventor: ELKINS, Scott A., Homer Glen, IL 60491 (US)
(74) Representative: CNH Industrial IP Department

(56) References cited:
- DE-A1-102015 013 547
- GB-A- 2 563 262
- US-B1- 9 824 490

## Description

### FIELD OF THE INVENTION

The present invention relates generally to systems and methods for generating earthmoving prescriptions, and, more particularly, to systems and methods for generating earthmoving prescriptions based at least in part on data generated by an unmanned aerial vehicle (UAV).

### BACKGROUND OF THE INVENTION

A wide variety of work vehicles, such as excavators, loaders, graders, shovels, bull-dozers, and/or the like, have been developed for performing various tasks related to earthmoving operations, such as carrying loads, moving earth, digging, dumping, stockpiling, and/or the like, at a worksite. These work vehicles have implements, such as buckets, claws, and/or the like of varying sizes, which are selected based on the site and task requirements. Typically, a machine operator manually controls the operation of the work vehicle to excavate one soil type at a time for sorting into different piles according to future use. However, such manual operation often results in a larger degree of mixing of the different soil types than desired. Further, the work vehicle operational settings may not be suitable for working all soil types, which may affect the efficiency of the work vehicle and the effectiveness and/or the results of the earthmoving operation.

Recently, advancements in unmanned aerial vehicle (UAV) technologies have allowed UAVs to be used within certain aspects of the earthmoving industry. For example, recent developments have been made in connection with using UAVs for the collection of data at a worksite. Examples thereof are disclosed in GB2563262A, US9824490B1, DE102015013547A1. However, the use of UAVs in this manner is still an emerging technology area. As such, further improvements and refinements are necessary to allow for the integration of UAVs into modern earthmoving practices, particularly in relation to the generation and use of worksite data.

Accordingly, an improved system and method for generating earthmoving prescriptions, including the use of UAVs in capturing at least some of the data used for generating such earthmoving prescriptions, would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to a method for generating earthmoving prescriptions. The method includes receiving, with one or more computing devices of a computing system, data indicative of a plurality of soil layers below a surface of a worksite, where the plurality of soil layers have different soil compositions, and where the data is generated by at least one sensor supported on an unmanned aerial vehicle (UAV) that is configured to be flown across the worksite. The method further includes receiving, with the one or more computing devices, data indicative of a surface profile of the surface of the worksite. Moreover, the method includes receiving, with the one or more computing devices, an input associated with a target profile of the worksite. Additionally, the method includes generating, with the one or more computing devices, an earthmoving prescription map based at least in part on the plurality of soil layers of the worksite, the surface profile of the worksite, and the target profile of the worksite. The earthmoving prescription map maps the plurality of soil layers between the surface profile of the worksite and the target profile of the worksite.

In another aspect, the present subject matter is directed to a system for generating earthmoving prescriptions. The system includes an unmanned aerial vehicle (UAV) configured to be flown across a worksite. The system further includes at least one sensor supported on the UAV, where the at least one sensor is configured to generate data indicative of a surface profile of a surface of the worksite and data indicative of a plurality of soil layers below the surface of the worksite. Additionally, the system includes a computing system communicatively coupled to the at least one sensor. The computing system is configured to receive, from the at least one sensor, the data indicative of the surface profile of the worksite. The computing system is further configured to receive, from the at least one sensor, the data indicative of the plurality of soil layers of the worksite. Moreover, the computing system is configured to receive an input associated with a target profile of the worksite. Additionally, the computing system is configured to generate an earthmoving prescription map based at least in part on the plurality of soil layers of the worksite, the surface profile of the worksite, and the target profile of the worksite. The earthmoving prescription map maps the plurality of soil layers between the surface profile of the worksite and the target profile of the worksite.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates an example view of one embodiment of a system for generating earthmoving prescriptions in accordance with aspects of the present invention;
FIG. 2 illustrates a schematic view of another embodiment of a system for generating earthmoving prescriptions in accordance with aspects of the present invention;
FIGS. 3A and 3B illustrate example views of various UAV passes made across a worksite to generate surface profile data and sub-surface soil composition data related to the worksite;
FIG. 4 illustrates a graphical view of an example earthmoving prescription map for performing an earthmoving operation that may be generated in accordance with aspects of the present invention;
FIG. 5 illustrates a side view of one embodiment of a work vehicle that may be controlled according to an earthmoving prescription map generated in accordance with aspects of the present invention; and
FIG. 6 illustrates a method for generating earthmoving prescriptions in accordance with aspects of the present invention.

Repeat use of reference characters in the present specification and drawings is intended to represent the same or analogous features or elements.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment.

In general, the present invention is directed to systems and methods for generating earthmoving prescriptions. Specifically, in several embodiments, a sensor-equipped unmanned aerial vehicle (UAV) is flown across a worksite to generate soil composition data indicative of different soil layers beneath a surface of the worksite. For instance, the UAV may make one or more soil composition passes across the worksite to generate the soil composition data. In some embodiments, the UAV may also be flown across the worksite to generate surface profile data indicative of a surface profile of the surface of the worksite. For instance, the UAV may make one or more surface profile passes, separate from the soil composition pass(es), across the worksite to generate the surface profile data. In such instance, a single sensor supported on the UAV may be configured to generate the soil composition data and the surface profile data, or separate sensors may be configured to generate the soil composition and the surface profile data, respectively. In other embodiments, the surface profile data may be otherwise generated, separately of the sensor-equipped UAV. Additionally, in one embodiment, both the soil composition data and the surface profile data may be collected by the UAV in a single pass.

A computing device of the invention is configured to receive the soil composition data, the surface profile data, and target profile data of the worksite, with the target profile data being received from an operator via a user interface or from a separate database. An earthmoving prescription map is then generated by the computing system based at least in part on the soil layers, the surface profile, and a target profile for the worksite, where the earthmoving prescription map indicates or maps the plurality of soil layers between the surface profile and the target profile of the worksite. The earthmoving prescription map generated based on the data may be used to subsequently control a work vehicle to perform an earthmoving operation to separately work the different soil layers to improve the time and fuel efficiencies of the earthmoving operation.

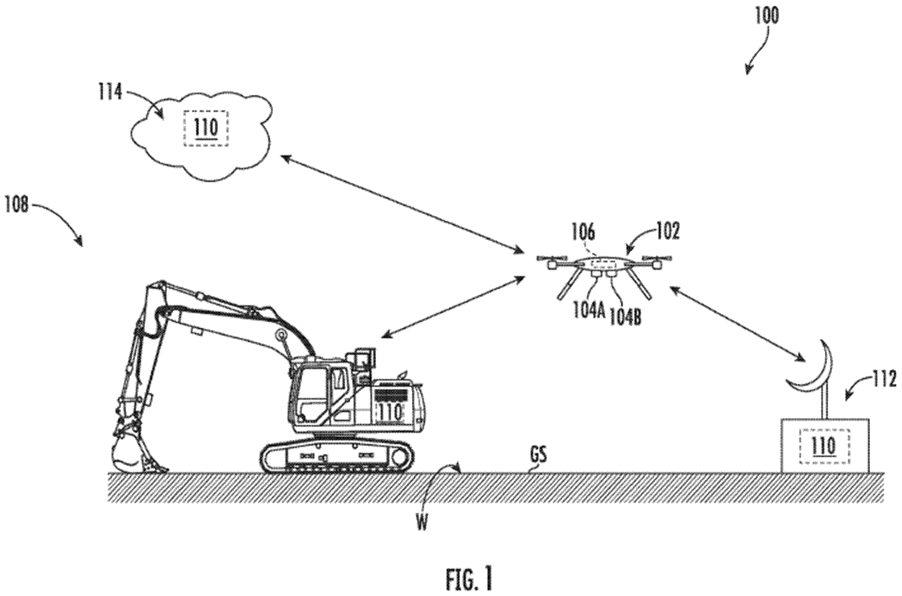

Referring now to the drawings, FIG. 1 illustrates an example view of one embodiment of a system 100 for generating an earthmoving prescription in accordance with aspects of the present invention. As shown in FIG. 1, the system 100 may generally include one or more unmanned aerial vehicles (UAVs) 102 configured to be flown over a worksite W to allow aerial-based data to be generated via an associated sensor(s) 104 supported on the UAV(s) 102. Specifically, the UAV(s) 102 is flown across the worksite W to allow the sensor(s) 104 to generate aerial-based data associated with a surface profile of a surface of the worksite W and soil layers below the surface of the worksite W. For instance, as will be described below, the UAV(s) 102 may be configured to make one or more passes across the worksite W (e.g., prior to the performance of an earthmoving operation within the worksite W) to allow the sensor(s) 104 to generate worksite data associated with the surface profile of a surface of the worksite W, and one or more passes (e.g., prior to the performance of an earthmoving operation within the worksite W) to allow the sensor(s) 104 to generate worksite data associated with the soil layers below the surface of the worksite W. Additionally, in some embodiments, the UAV(s) 102 may be configured to make one or more supplemental passes across the worksite W (e.g., after one or more passes have been made to generate the worksite data associated with the soil layers to allow the sensor(s) 104 to generate updated data associated with the soil layers below the surface profile of the worksite W within an area-of-interest identified using the previously generated worksite data associated with the soil layers.

In some embodiments, the sensor(s) 104 may include separate sensors, such as one or more surface profile sensors 104A and/or one or more soil composition sensors 104B, to separately generate the worksite data associated with the surface profile and the worksite data associated with the soil layers. In such embodiment, the surface profile sensor(s) 104A is configured to capture or generate data associated with the topology or surface profile of the surface of the worksite over which the UAV 102 is flown. In this regard, the surface profile sensor(s) 104A (hereafter referred to as "sensor(s) 104A") may correspond to any suitable sensor(s) or sensing device(s) capable of detecting the surface profile or contour of the worksite. For instance, in one embodiment, the sensor(s) 104A may comprise one or more vision-based sensors, such as one or more Light Detection and Ranging (LIDAR) devices and/or one or more cameras. A LIDAR device may, for example, may be used to generate a three-dimensional point cloud as the UAV 102 flies across the worksite that includes a plurality data points representing the topology or surface profile of the worksite. Alternatively, a three-dimensional camera (e.g., a stereographic camera) may be used to generate three-dimensional images as the UAV 102 flies across the worksite that depict the topology or surface profile of the worksite.

Moreover, the soil composition sensor(s) 104B is configured to capture or generate data associated with soil layers below the surface of the worksite over which the UAV 102 is flown. In this regard, the soil composition sensor(s) 104B (hereafter referred to as "sensor(s) 104B") may correspond to any suitable sensor(s) or sensing device(s) capable of detecting the soil composition below the surface of the worksite indicative of different soil layers within the worksite and/or buried obstacles. For instance, in one embodiment the sensor(s) 104B may comprise a ground penetrating radar (GPR) device and/or another similar device. A GPR device may be configured to generate a polarized field comprised of polarized electromagnetic waves as the UAV 102 flies across the worksite which may penetrate the worksite surface, wherein the reflection of waves within the polarized field may be used to detect various sub-surface soil layers and other sub-surface features, e.g., buried infrastructure (pipes, wires, etc.). For instance, such reflected waves may indicate changes in density below the surface of the worksite, which may further be indicative of changes between different soil types and/or the presence of sub-surface features.

As will be described below, the data generated by the sensor(s) 104 is used to generate an earthmoving prescription map that indicates changes between soil layers at different depths between the surface profile of the worksite W and a desired or target profile of the worksite. In such an embodiment, the earthmoving prescription map may be used as a reference for working soil layers separately during an earthmoving operation. For instance, each soil layer may be associated with a soil type or composition. The earthmoving prescription map may prescribe one or more operational settings of a work vehicle for working each soil layer. A computing system of the disclosed system may control a user interface to indicate to an operator the distance to the next soil layer such that the operator can better separate the soil types when stockpiling, and optionally indicate prescribed operational setting(s) of the work vehicle for each soil layer such that the work vehicle may be more fuel and time efficient. Additionally, or alternatively, the computing system may be configured to control the work vehicle to automatically perform an earthmoving operation to separate the different soil composition layers based on the earthmoving prescription map.

As will be described in greater detail below, in addition to the sensor(s) 104, the UAV(s) 102 may also support one or more additional components, such as an on-board computing device 106. In general, the UAV computing device 106 may be configured to control the operation of the UAV(s) 102, such as by controlling the propulsion system (not shown) of the UAV(s) 102 to cause the UAV(s) 102 to be moved relative to the worksite W. For instance, in one embodiment, the UAV computing device 106 may be configured to receive flight plan data associated with a proposed flight plan for the UAV(s) 102, such as a flight plan selected such that the UAV(s) 102 makes one or more passes across the worksite in a manner that allows the sensor(s) 104 to capture aerial-based topology or surface profile data across the worksite W and one or more separate passes across the worksite in a manner that allows the sensor(s) 104 to capture data associated with different soil layers below the surface profile of the worksite W (or at least across the portion of the worksite W that will be worked). Based on such flight plan data, the UAV computing device 106 may automatically control the operation of the UAV(s) 102 such that the UAV(s) 102 is flown across the worksite W according to the proposed flight plan to allow the desired data to be generated by the sensor(s) 104.

It should be appreciated that the UAV(s) 102 may generally correspond to any suitable aerial vehicle capable of unmanned flight, such as any UAV capable of controlled vertical, or nearly vertical, takeoffs and landings. For instance, in the illustrated embodiment, the UAV(s) 102 corresponds to a quadcopter. However, in other embodiments, the UAV(s) 102 may correspond to any other multi-rotor aerial vehicle, such as a tricopter, hexacopter, or octocopter. In still further embodiments, the UAV(s) 102 may be a single-rotor helicopter, or a fixed wing, hybrid vertical takeoff and landing aircraft.

Moreover, in certain embodiments, the inventive system 100 may also include one or more work vehicles 108 configured to perform an earthmoving operation within the worksite W. As shown, the work vehicle 108 is configured as an excavator. However, in other embodiments, the work vehicle 108 may be configured as any other suitable work vehicle, such as loaders, shovels, graders, backhoes, bull-dozers, and/or the like. As indicated above, the system 100 may allow for the earthmoving prescription to be generated based on the data generated by the UAV(s) 102. In such instances, during the performance of the earthmoving operation, the work vehicle(s) 108 may, for example, be controlled to work the worksite W based at least in part on the earthmoving prescription.

Additionally, as shown in FIG. 1, the inventive system 100 may also include one or more remote computing devices 110 separate from or remote to the UAV(s) 102. In several embodiments, the remote computing device (s) 110 may be communicatively coupled to the UAV computing device 106 (e.g., via a wireless connection) to allow data to be transmitted between the UAV 102 and the remote computing device(s) 110. For instance, in one embodiment, the remote computing device(s) 110 may be configured to transmit instructions or data to the UAV computing device 106 associated with the desired flight plan across the worksite W. Similarly, the UAV computing device 106 may be configured to transmit or deliver the data generated by the sensor(s) 104 to the remote computing device(s) 110.

It should be appreciated that the remote computing device(s) 110 may correspond to a stand-alone component or may be incorporated into or form part of a separate component or assembly of components. For example, in one embodiment, the remote computing device(s) 110 may form part of a base station 112. In such an embodiment, the base station 112 may be disposed at a fixed location, such as a storage building or central control center, which may be proximal or remote to the worksite W, or the base station 112 may be portable, such as by being transportable to a location within or near the worksite W. In addition to the base station 112 (or an alternative thereto), the remote computing device(s) 110 may form part of a work vehicle, such as the work vehicle 108 described above (e.g., an excavator, loaders, shovels, graders, backhoes, bull-dozers, etc.). For instance, the remote computing device(s) 110 may correspond to a vehicle computing device provided in operative association with the work vehicle 108 and/or an implement computing device provided in operative association with a corresponding implement of the work vehicle 108. In other embodiments, the remote computing device(s) 110 may correspond to or form part of a remote cloud-based computing system 114. For instance, as shown in FIG. 1, the remote computing device(s) 110 may correspond to or form part of a cloud computing system 114 located remote to the worksite W.

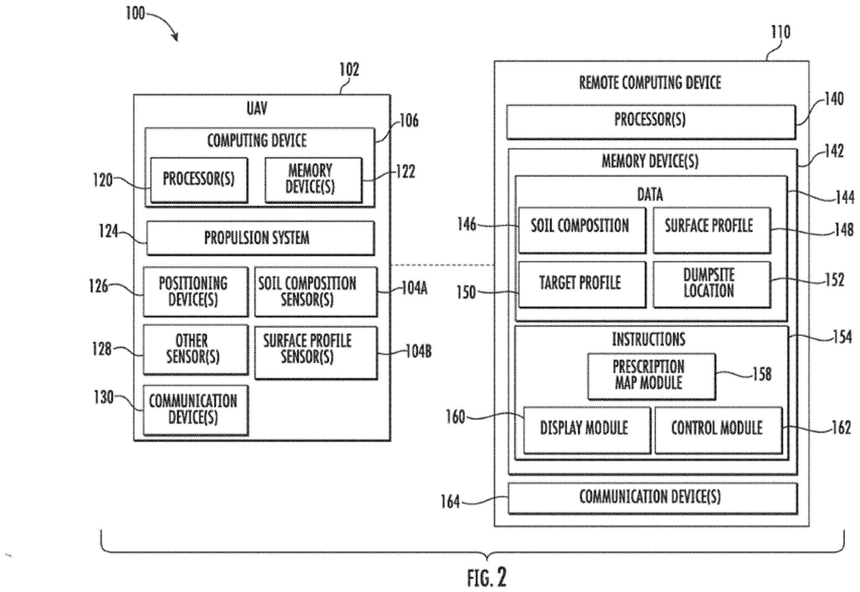

Referring now to FIG. 2, a schematic view of another embodiment of a system 100 for generating earthmoving prescriptions is illustrated in accordance with aspects of the present invention. In general, the system 100 shown in FIG. 2 will be described with reference to an example implementation of the system components illustrated in FIG. 1, such as the UAV 102 and the remote computing device 110. However, it should be appreciated that, in other embodiments, the disclosed system 100 may have any other suitable system configuration or architecture and/or may incorporate any other suitable components and/or combination of components that generally allow the system 100 to function as described herein.

As shown, the system 100 includes one or more UAVs, such as the UAV 102 described above with reference to FIG. 1. In general, the UAV 102 may include and/or be configured to support various components, such as one or more sensors, computing devices, and propulsion systems. For instance, as indicated above, the UAV 102 may be provided in operative association with one or more sensors 104, such as one or more surface profile sensors 104A and/or one or more soil composition sensors 104B.

Additionally, as indicated above, the UAV 102 may also include a computing device 106. In general, the UAV computing device 106 may correspond to any suitable processor-based device(s), such as a controller or any combination of controllers. Thus, in several embodiments, the UAV computing device 106 may include one or more processor(s) 120 and associated memory device(s) 122 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 122 of the UAV computing device 106 may generally comprise memory element(s) including, but not limited to, computer readable medium (e.g., random access memory (RAM)), computer readable non-volatile medium (e.g., a flash memory), a compact disc-read only memory (CD-ROM), a magneto-optical disk (MOD), a digital versatile disc (DVD) and/or other suitable memory elements. Such memory device(s) 122 may generally be configured to store suitable computer-readable instructions that, when implemented by the processor(s) 120, configure the UAV computing device 106 to perform various computer-implemented functions. It should be appreciated that the UAV computing device 106 may also include various other suitable components, such as a communications circuit or module, a network interface, one or more input/output channels, a data/control bus and/or the like.

In several embodiments, the UAV computing device 106 may be configured to automatically control the operation of a propulsion system 124 of the UAV 102. For instance, as indicated above, the UAV computing device 106 may be configured to automatically control the propulsion system 124 in a manner that allows the UAV 102 to be flown across a worksite according to a predetermined or desired flight plan. In this regard, the propulsion system 124 may include any suitable components that allow for the trajectory, speed, and/or altitude of the UAV 102 to be regulated, such as one or more power sources (e.g., one or more batteries), one or more drive sources (e.g., one or more motors and/or engines), and one or more lift/steering sources (e.g., propellers, blades, wings, rotors, and/or the like).

Additionally, as shown in FIG. 2, the UAV 102 may also include a positioning device 126. In one embodiment, the positioning device(s) 126 may be configured to determine the exact location of the UAV 102 within the worksite using a satellite navigation position system (e.g. a GPS system, a Galileo positioning system, the Global Navigation satellite system (GLONASS), the BeiDou Satellite Navigation and Positioning system, and/or the like). In such an embodiment, the location determined by the positioning device(s) 126 may be transmitted to the UAV computing device 106 (e.g., in the form coordinates) and stored within the computing device's memory for subsequent processing and/or analysis. By continuously monitoring the location of the UAV 102 as a pass is being made across the worksite, the sensor data acquired via the sensor(s) 104 may be geo-located within the worksite. For instance, in one embodiment, the location coordinates derived from the positioning device(s) 126 and the sensor data generated by the sensor(s) 104 may both be time-stamped. In such an embodiment, the time-stamped data may allow the sensor data to be matched or correlated to a corresponding set of location coordinates received or derived from the positioning device(s) 126, thereby allowing a earthmoving prescription map to be generated that geo-locates the monitored surface profile and soil composition across the entirety of the worksite.

It should be appreciated that the UAV 102 may also include any other suitable components. For instance, in addition to the sensor(s) 104, the UAV 102 may also include various other sensors 128, such as one or more inertial measurement units for monitoring the orientation of the UAV 102 and/or one or more altitude sensors for monitoring the position of the UAV 102 relative to the ground. Moreover, the UAV 102 may include a communications device(s) 130 to allow the UAV computing device 106 to be communicatively coupled to one or more other system components. The communications device 130 may, for example, be configured as a wireless communications device (e.g., an antenna or transceiver) to allow for the transmission of wireless communications between the UAV computing device 106 and one or more other remote system components.

As shown in FIG. 2, the system 100 may also include one or more computing devices or controllers remote to the UAV 102, such as the remote computing device(s) 110 described above with reference to FIG. 1. In general, the remote computing device(s) 110 may be configured to be in communication with one or more components of the UAV 102 to allow data to be transferred between the UAV 102 and the remote computing device(s) 110, such as sensor data generated via the sensor(s) 104. As indicated above, the remote computing device(s) 110 may correspond to a stand-alone component or may be incorporated into or form part of a separate component or assembly of components. For example, the remote computing device(s) 110 may be incorporated into or form part of a base station 112 and/or a cloud computing system 114. In addition, (or as alternative thereto), the remote computing device(s) 110 may correspond to a component of the work vehicle 108 and/or an implement of the work vehicle 108, such as by corresponding to a vehicle computing device and/or an implement computing device.

Similar to the UAV computing device 106, the remote computing device(s) 110 may be configured as any suitable processor-based device(s), such as a controller or any combination of controllers. As such, the remote computing device(s) 110 may include one or more processor(s) 140 and associated memory device(s) 142 configured to perform a variety of computer-implemented functions. The memory device(s) 142 may generally be configured to store suitable computer-readable instructions that, when implemented by the processor(s) 140, configure the remote computing device(s) 110 to perform various computer-implemented functions. It should be appreciated that the remote computing device(s) 110 may also include various other suitable components, such as a communications circuit or module, a network interface, one or more input/output channels, a data/control bus and/or the like.

In one embodiment, the memory 142 of the remote computing device(s) 110 may include one or more databases for storing data indicative of the soil composition below a surface of the worksite. For instance, as shown in FIG. 2, the memory 142 may include a soil composition database 146 for storing data received from the sensor(s) 104B and/or any other suitable source (e.g., an operator, an offsite server, separate database, separate computing device, etc.) associated with a portion of the worksite, such as immediately before the performance of an earthmoving operation, that is used as an indicator of the soil composition of the worksite (and which is further indicative of different soil layers having different soil types, underground obstacles, and/or the like). It should be appreciated that, as used herein, the data received from the sensor(s) 104B may include any suitable type of data that allows for the worksite to be analyzed, including radar data, and/or any other suitable data. The term soil composition data 146 may include any suitable data transmitted to the remote computing device(s) 110 from the sensor(s) 104B, and/or any other suitable source, and stored within the soil composition database 142 for subsequent processing and/or analysis.

Further, the memory 142 of the remote computing device(s) 110 may include a surface profile database 148 for storing data received from the sensor(s) 104A, and/or any other suitable source (e.g., an offsite server, separate database, separate computing device, etc.) associated with a portion of the worksite. For instance, data indicative of the current grade or surface profile of the worksite may be received from the operator and/or from any other suitable source (e.g., by uploading a 3D map previously generated for the current worksite grade via a user interface) and/or from the sensor(s) 104A. For example, the sensor(s) 104A may be configured to capture data associated with a portion of the worksite, such as immediately before or at the start of the performance of an earthmoving operation, which may be used as an indicator of the initial grade or surface profile of the worksite. It should be appreciated that, as used herein, the data received from the sensor(s) 104A may include any suitable type of data that allows for the worksite to be analyzed, including radar data, and/or any other suitable data. The term surface profile data 148 may include any suitable data transmitted to the remote computing device 110 from the operator, the sensor(s) 104A, and/or any other suitable source and stored within the surface profile database 148 for subsequent processing and/or analysis.

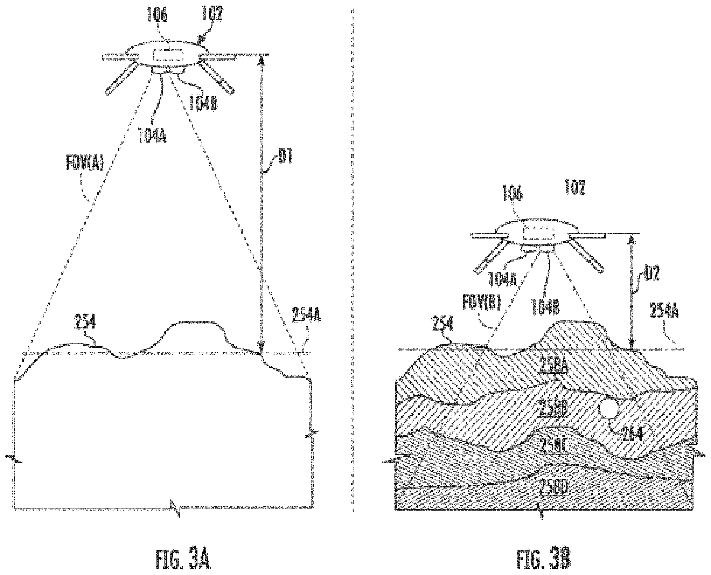

For instance, referring now to FIGS. 3A and 3B, example views of a UAV 102 making passes over the same portion of a worksite W to generate surface profile data and soil composition data associated with such portion of the worksite W are illustrated in accordance with aspects of the present subject matter. Specifically, FIG. 3A illustrates the UAV 102 making a surface profile pass(es) across the worksite. Additionally, FIG. 3B illustrates the UAV 102 making soil composition pass(es) across the worksite.

As shown in FIG. 3A, during the surface profile pass(es), the UAV 102 is flown at a first distance D1 from a surface 254 of the worksite (e.g., from an average surface 254A of the worksite). At such distance D1, the sensor(s) 104A may generate surface profile data that is indicative of the surface profile or topology of the surface 254 of the worksite within a field of view FOV(A) of the sensor(s) 104A. Similarly, as shown in FIG. 3B, during the soil composition pass(es), the UAV 102 is flown at a second distance D2 from the surface 254 of the worksite (e.g., from the average surface 254A of the worksite). At such distance D2, the sensor(s) 104B may generate soil composition data that is indicative of different soil composition layers and/or underground obstacles below the surface 254 of the worksite within a field of view FOV(B) of the sensor(s) 104B. For example, as shown in the illustrated embodiment, the soil composition data is indicative of a plurality of different soil layers 258 (e.g., 258A, 258B, 258C, 258D) which have different soil compositions, and an underground obstacle 264 below the surface 254 of the worksite. The second distance D2 may be selected from one or more predetermined manufacturer settings for the sensor(s) 104B or may be selected in any other suitable way.

In some embodiments, the first distance D1 is larger than the second distance D2. For instance, detection signals from the sensor(s) 104A for generating the surface profile data mainly pass through air, which allows the detection signals to travel further and quicker than detection signals from the sensor(s) 104B for generating the soil composition data, which travel through denser worksite materials below the surface 254. As such, the UAV 102 is flown at the first, larger distance D1 for the surface profile pass(es), which allows the UAV 102 to be less susceptible to above ground obstacles within the worksite than when flying at the second distance D2 for the soil composition pass(es). Alternatively, or additionally, the UAV 102 is flown at a faster speed across the worksite during the surface profile pass(es) than during the soil composition pass(es) as the detection signals for the surface profile pass(es) travel quicker than the detection signals for the soil composition pass(es).

Further, the UAV 102 may perform additional soil composition passes across an area-of-interest. For instance, the soil composition data indicative of the plurality of soil composition layers 258 and the underground obstacle(s) 264 may be displayed to an operator (e.g., via a user interface). An operator may then identify (e.g., via the user interface) an area-of-interest based on the displayed soil composition data. For example, the operator may indicate an area-of-interest around the suspected underground obstacle 264. Thereafter, one or more additional soil composition passes may be made across the worksite to generate additional or updated soil composition data indicative of the soil composition within the area-of-interest.

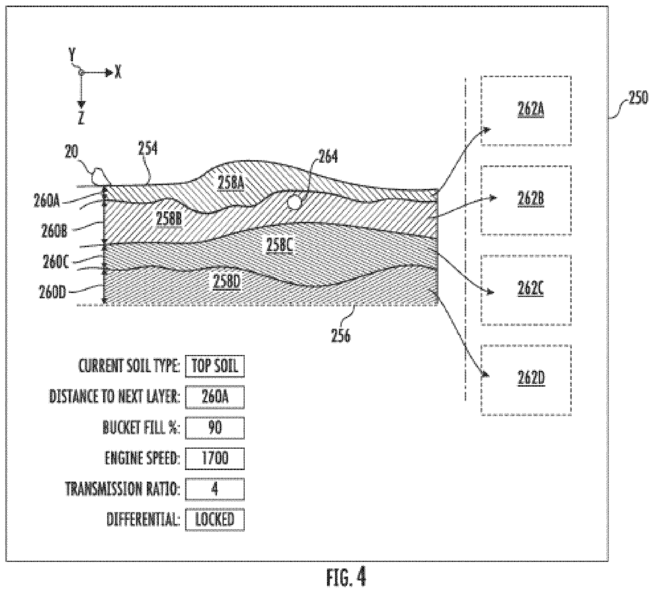

As will be described below with reference to FIG. 4, the data generated by the sensor(s) 104 captured during the different passes across the worksite can then be used to generate an earthmoving prescription for separately working different soil types within the worksite.

Referring back to FIG. 2, the memory 142 may also include a target worksite profile database 150 for storing data indicative of a target profile or grade of the worksite (e.g., trench dimensions and/or a 3D map generated for the target worksite grade). The data indicative of the target profile may be received from the operator via a user interface. However, the data indicative of the target grade of the worksite may be received from any other source, such as a separate database. The term target worksite data 150 may include any suitable data transmitted to the remote computing device 110 from the operator, and/or any other suitable source, and stored within the target worksite database 150 for subsequent processing and/or analysis.

Additionally, the memory 142 may include a stockpile location database 152 for storing the data indicative of locations of stockpiles (e.g., coordinates) within the worksite for each soil type to be removed from the worksite. The stockpile location(s) may be received from the operator via a user interface. However, the data indicative of the stockpile location may be received from any other source, such as a separate database. The term stockpile location data 152 may include any suitable data transmitted to the remote computing device 110 from the operator, and/or any other suitable source, and stored within the stockpile location database 152 for subsequent processing and/or analysis.

Referring still to FIG. 2, in several embodiments, the instructions stored within the memory 142 of the computing device 110 may be executed by the processor(s) 140 to implement an earthmoving prescription map module 158. In general, the earthmoving prescription map module 158 may be configured to analyze the soil composition data 146 deriving from the sensor(s) 104B along with at least one of the surface profile data 148 deriving from the sensor(s) 104A or the target worksite data 150 to generate an earthmoving prescription map for the worksite. For instance, as described above, the soil composition data 146 detected by the sensor(s) 104B may be used to identify the soil type at each position and depth within the sensed area of the worksite, as well as any underground obstacles, below the field surface. The soil earthmoving prescription map module 158 may then generate an earthmoving prescription map for the worksite indicating the transitions between the different soil composition layers and any underground obstacles between the surface profile of the worksite and the target profile of the worksite based at least in part on the target worksite data 150, the soil composition data 146, and the surface profile data 148.

The earthmoving prescription map may further correlate a soil type for each soil composition layer detected by the sensor(s) 104B using a known correlation. Moreover, the earthmoving prescription map may prescribe one or more operational settings for the associated work vehicle corresponding to the soil type for each soil composition layer. For instance, the earthmoving prescription map may prescribe at least one of an engine speed of an engine, a transmission gear ratio of a transmission, a locking state of a differential, or a maximum percentage fill of an implement of the associated work vehicle for each soil type. In some embodiments, at least one of the engine speed of the engine, the transmission gear ratio of the transmission, the locking state of the differential, or the maximum fill percentage of the implement prescribed differs between adjacent soil composition layers. Additionally, the earthmoving prescription map may prescribe a stockpile location corresponding to the soil type determined for each soil composition layer.

Referring to FIG. 4, an example embodiment of a graphical view of an earthmoving prescription map 250 for performing an earthmoving operation is illustrated in accordance with aspects of the present invention. As shown in FIG. 4, the earthmoving prescription map 250 may include a section view of the worksite indicating the changes in soil composition between the surface profile 254 and a target profile 256 of the worksite, based on surface profile data 148 received from the surface profile sensor(s) 104A (FIGS. 1-3), the soil composition data 146 (including any updated soil composition data for areas-of-interest) received from the soil composition sensor(s) 104B (FIGS. 1-3), and the target profile data 150 received from an operator and/or the like. For example, the earthmoving prescription map 250 includes a first soil composition layer 258A, a second soil composition layer 258B, a third soil composition layer 258C, and a fourth soil composition layer 258D. Each soil composition layer 258 is generally associated with a different soil composition, which is indicative of a particular soil type, such as topsoil, clay, sand, rock, and/or the like, For example, the first soil composition layer 258A is associated with a first soil composition and type, the second soil composition layer 258B is associated with a second soil composition and type, the third soil composition layer 258C is associated with a third soil composition and type, and the fourth soil composition layer 258D is associated with a fourth soil composition and type. Adjacent soil composition layers 258 have different soil compositions, and therefore, types. For instance, the first and second soil compositions are different from each other. Similarly, the second and third soil compositions are different from each other, and the third and fourth soil compositions are different from each other.

Further, in some embodiments, the earthmoving prescription map 250 identifies the depth range (e.g., Z coordinates) across which each soil composition layer 258 extends for each position (e.g., X, Y coordinate location) within the worksite. For instance, as shown in FIG. 4, the depth ranges 260 for the soil composition layers 258 are provided for the current location of an implement 20 (e.g., a bucket) of the work vehicle 108 (FIG. 1) performing an earthmoving operation within the worksite. For example, the first soil composition layer 258A extends across a first depth range 260A between the surface 254 of the worksite and the second soil composition layer 258B. The second soil composition layer 258B extends across a second depth range 260B, below the first soil composition layer 258A, particularly between the first and third soil composition layers 258A, 258C. The third soil composition layer 258C extends across a third depth range 260C, below the second composition layer 258B, particularly between the second and fourth soil composition layers 258B, 258D. Additionally, the fourth soil composition layer 258D extends across a fourth depth range 260D, below the third soil composition layer 258C, particularly between the third soil composition layer 258C and the target profile 256 of the worksite. Such depth ranges 260 may be used to determine the distance to the next soil composition layer 258.

Moreover, in some embodiments, the earthmoving prescription map 250 indicates an underground obstacle(s) (e.g., the obstacle 264), such as a pipe, a wire, a tank, and/or the like. As described above, the obstacle 264 may be identified from data received from an operator via a user interface or another suitable source and/or from the soil composition data 146 received from the sensor(s) 104B. When the obstacle 264 is identified using both the data from the sensor(s) 104B and data input from an operator and/or another suitable source, the confidence in the accuracy of the soil composition data 146 may be increased.

As indicated above, in some embodiments, the earthmoving prescription map 250 suggests or prescribes at least one operational setting of the work vehicle 108 (FIG. 1) depending on the soil composition or type being worked. For instance, the earthmoving prescription map 250 may prescribe at least one of an engine speed of an engine, a transmission gear ratio of a transmission, whether a differential should be locked or unlocked, and/or a maximum percentage that the implement 20 should be filled for at least the current soil composition layer or type being worked by a work vehicle performing the earthmoving operation. For example, topsoil may be easier to work than clay, as such, the engine speed may be lower, or a higher transmission gear ratio may be used when working topsoil than clay.

Additionally, as indicated above, in some embodiments, the earthmoving prescription map 250 identifies separate stockpiling locations 262 for each soil composition layer 258. For instance, as shown in FIG. 4, the earthmoving prescription map 250 identifies a first stockpile location 262A for depositing materials from the first soil composition layer 258A, a second stockpile location 262B for depositing materials from the second soil composition layer 258B, a third stockpile location 262C for depositing materials from the third soil composition layer 258C, and a fourth stockpile location 262D for depositing materials from the fourth soil composition layer 258D. As such, different soil types removed during an earthmoving operation may be kept separate for future uses.

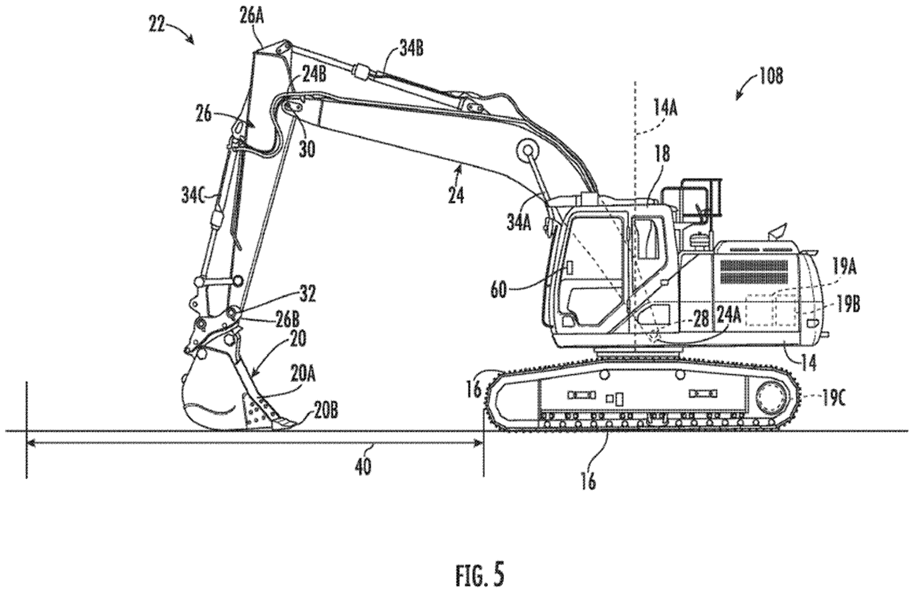

Referring back to FIG. 2, in some embodiments, the instructions 154 stored within the memory 142 of the remote computing system 110 may be executed by the processor(s) to implement a display module 160. The display module 160 may generally be configured to control a user interface (e.g., user interface 60 shown in FIG. 5) associated with a work vehicle performing an earthmoving operation to indicate to an operator at least one of a distance to the next soil composition layer or soil type, the current soil type being worked, a stockpile location, and/or an operational setting of the work vehicle. For example, the display module 160 may be configured to control a display screen of the user interface to generate an augmented view of the worksite, such as to display the earthmoving prescription map 250 shown in FIG. 4, including the surface profile 254 of the worksite, the target profile 256 of the worksite, the different soil composition layers 258 between the surface profile 254 and the target profile 256 of the worksite, underground obstacle(s) 264, and/or at least one of a distance to the next soil composition layer or soil type, the current soil type being worked, a stockpile location, and/or an operational setting of the work vehicle.

Additionally, the instructions 154 stored within the memory 142 of the remote computing system 110 may be executed by the processor(s) to implement a control module 162. The control module 162 may generally be configured to control a work vehicle (e.g., work vehicle 108 in FIG. 1) to automatically perform an earthmoving operation based on the earthmoving prescription map 250 (FIG. 4) generated by the earthmoving prescription map module 158.

For instance, referring now to FIG. 5, a perspective view of one embodiment of the work vehicle 108 is illustrated. As indicated above, the work vehicle 108 shown in FIG. 5 is configured as an excavator. However, in other embodiments, the work vehicle 108 may be configured as any other suitable work vehicle, such as a loader, shovel, grader, backhoe, bull-dozer, and/or the like.

As shown in FIG. 5, the work vehicle 108 includes a frame or chassis 14 coupled to and supported by a pair of tracks 16 for movement across a worksite. However, in other embodiments, the chassis 14 may be supported in any other way, for example by wheels, a combination of wheels and tracks, or a fixed platform. In some embodiments, an operator's cab 18 may be supported by a portion of the chassis 14 and may house the user interface 60 comprising various input devices for permitting an operator to control the operation of one or more components of the work vehicle 108. However, it should be appreciated that, in some embodiments, one or more components of the user interface 60 may be positioned remotely from the work vehicle 108.

Moreover, the work vehicle 108 has drive components, such as an engine 19A, a transmission 19B, and a differential 19C mounted on the chassis 14. The transmission 19B may be operably coupled to the engine 19A and may provide variably adjusted gear ratios for transferring engine power to the tracks 16 via a drive axle assembly (or via axles if multiple drive axles are employed). The tracks 16 coupled to each axle may be selectively locked together for rotation by the differential 19C coupled to the axle between the tracks 16. Selective coupling or decoupling of the differential 19C allows the work vehicle 108 provides controllable steering to the work vehicle 108.

Additionally, the work vehicle 108 includes the implement 20 articulable relative to the chassis 14 for performing earth moving operations within a worksite. The chassis 14 may, in some embodiments, be configured such that the operator's cab 18 and/or the articulable implement 20 is rotatable about a chassis axis 14A. In one embodiment, the implement 20 is part of a linkage assembly 22 comprising a boom arm 24 and a dipper arm 26. The boom arm 24 extends between a first end 24A and a second end 24B. Similarly, the dipper arm 26 extends between first end 26A and a second end 26B. The first end 24A of the boom arm 24 is pivotably coupled to the chassis 14 about a first pivot axis 28, and the second end 24B of the boom arm 24 is pivotably coupled to the first end 26A of the dipper arm 26 about a second pivot axis 30. Further, the implement 20 is pivotably coupled to the second end 26B of the dipper arm 26 about a third pivot axis 32. The implement 20, in one embodiment, is configured as a bucket having a cavity 20A and a plurality of teeth 20B, where the teeth 20B help to break up worksite materials for collection within the cavity 20A. However, in other embodiments, the implement 20 may be configured as any other suitable ground engaging tool, such as a claw, and/or the like.

The linkage assembly 22 further includes a plurality of actuators for articulating components 20, 24, 26 of the linkage assembly 22. For instance, a first actuator 34A is coupled between the boom arm 24 and the chassis 14 for pivoting the boom arm 24 relative to the chassis 14. Similarly, a second actuator 34B is coupled between the boom arm 24 and the dipper arm 26 for pivoting the dipper arm 26 relative to the boom arm 24. Further, a third actuator 34C is coupled between the dipper arm 26 and the implement 20 (hereafter referred to as "bucket 20" for the sake of simplicity and without intent to limit) for pivoting the bucket 20 relative to the dipper arm 26. In one embodiment, the actuators 34A, 34B, 34C are configured as hydraulic cylinders. However, it should be appreciated that the actuators 34A, 34B, 34C may be configured as any other suitable actuators or combination of actuators. By selectively pivoting the components 24, 24, 26 of the linkage assembly 22, the bucket 20 may perform various earthmoving operations within a worksite. In particular, the bucket 20 may be actuatable over a stroke length 40, where the stroke length 40 generally extends from adjacent the tracks 16 to where the bucket 20 is fully extended away from the cab 18.

As will be described below in greater detail, the actuators 34A, 34B, 34C of the work vehicle 108 may be controlled by a computing system (e.g., the remote computing system 110) to perform one or more tasks of an earthmoving operation for a worksite. For instance, the actuators 34A, 34B, 34C of the work vehicle 108 may be used to determine the current fill of the bucket 20 (e.g., based on the force(s) of the actuator(s) used to actuate the bucket 20) and/or the position of the bucket 20 along the stroke length 40 and/or relative to the target profile of the worksite. A maximum bucket fill percentage is typically selected according to the soil type being excavated, with the maximum bucket fill percentage being higher for lighter, easier to work soil types.

It should be appreciated that the position of the bucket 20 along the stroke length 40 and/or relative to the target profile of the worksite may be determined in any other suitable way. For instance, one or more position sensors (not shown) may be positioned on one or more components of the work vehicle 108 for determining and/or monitoring the position of the bucket 20. For example, the position sensor(s) may comprise accelerometer(s), gyroscope(s), inertial measurement unit(s) (IMU(s)), rotational sensor(s), proximity sensor(s), a combination of such sensors, and/or the like.

It should additionally be appreciated that the configuration of the work vehicle 108 described above and shown in FIG. 5 is provided only to place the present invention in an exemplary field of use. Thus, it should be appreciated that the present invention may be readily adaptable to any manner of work vehicle configuration. For example, in an alternative embodiment, the work vehicle 108 may further include any other tools, implements, and/or components appropriate for use with a work vehicle 108.

Referring to FIGS. 2 and 5, the control module 162 may more particularly be configured to control the operation of one or more components of a work vehicle (e.g., the work vehicle 108), such as by controlling the operation of one or more implement actuators (e.g., actuator(s) 34A, 34B, 34C) to control the implement (e.g., implement 20) and/or the operation of one or more drive components (e.g., the engine 19A, the transmission 19B, the differential 19C), to perform an earthmoving operation based on the earthmoving prescription map. For instance, the control module 162 may monitor a position of the implement 20 relative to the soil composition layers 258 identified by the earthmoving prescription map 250 (FIG. 4) and control the position of the implement 20 (e.g., height and/or angle) to separately remove the soil composition layers 258. Further, the control module 162 may control the work vehicle 108 to deposit the removed worksite materials of a given soil type to a corresponding stockpile location 262 (FIG. 4). Moreover, the control module 162 may pre-emptively adjust the operation of one or more of the drive components 19A, 19B, 19C based to the soil type to be worked to improve the efficiency of the earthmoving operation.

Additionally, the remote computing system 110 may also include a communications interface 164 to provide a means for the remote computing system 110 to communicate with any of the various other system components described herein. For instance, one or more communicative links or interfaces (e.g., one or more data buses) may be provided between the communications interface 164 and the user interface 60 to allow operator inputs to be received by the remote computing system 110 and/or to allow the remote computing system 110 to control the operation of one or more components of the user interface 60 to present the earthmoving prescription map 250 (FIG. 4) (e.g., a distance to the next soil composition layer, a soil composition type of the current soil composition layer being worked, one or more prescribed operating settings for the current soil composition layer, and/or the like), and/or one or more indicators of the progress of the earthmoving operation to the operator. Similarly, one or more communicative links or interfaces (e.g., one or more data buses) may be provided between the communications interface 164 and the sensor(s) 104 to allow data transmitted from the sensor(s) 104 to be received by the remote computing system 110. Moreover, one or more communicative links or interfaces (e.g., one or more data buses) may be provided between the communications interface 164 and the implement actuator(s) 34A, 34B, 34C for allowing the remote computing system 110 to control the operation of one or more operations of the actuator(s). Additionally, one or more communicative links or interfaces (e.g., one or more data buses) may be provided between the communications interface 164 and the drive components 19A, 19B, 19C of the work vehicle for allowing the remote computing system 110 to control the operation of the drive components.

It should be appreciated that, although the various control functions and/or actions were generally described above as being executed by one of the controllers of the system (e.g., the UAV computing device 106 or the remote computing device(s) 110, such control functions/actions may generally be executed by either of such computing devices 106, 110 and/or may be distributed across both of the computing devices 106, 110. For instance, in an alternative embodiment, the soil composition module 146 and/or the surface profile module 148 may be executed by the UAV computing device 106 to assess the soil composition data and/or the surface profile data generated by the sensor(s) 104. Similarly, in another alternative embodiment, the operation of the UAV 102 (e.g., the operation of the propulsion system 124) may be controlled by the remote computing device(s) 110 as opposed to the UAV computing device 106.

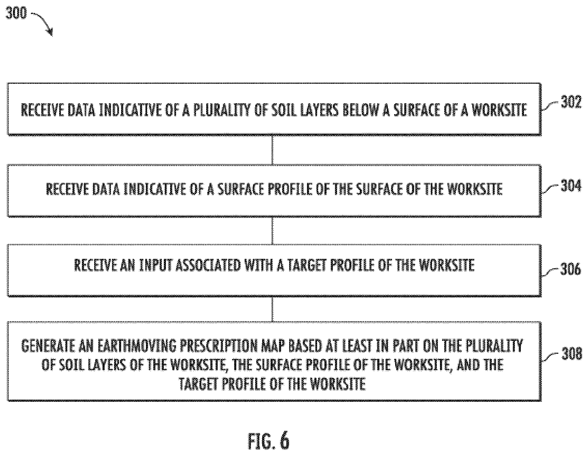

Referring now to FIG. 6, a flow diagram of one embodiment of a method 300 for generating earthmoving prescriptions is illustrated in accordance with aspects of the present subject matter. In general, the method 300 will be described herein with reference to the various system components of the system 100 shown in FIGS. 1 and 2. However, it should be appreciated that the inventive method 300 may be implemented with work vehicles having any other suitable configurations, and/or within systems having any other suitable system configuration. In addition, although FIG. 6 depicts steps performed in a particular order for purposes of illustration and discussion, the method steps discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present invention as defined by the appended claims.

As shown in FIG. 6, at (302), the method 300 includes receiving data indicative of a plurality of soil layers below a surface of a worksite. For instance, as described above, a UAV(s) (e.g., UAV(s) 102) is flown over a worksite such that sensor(s) 104 (e.g., sensor(s) 104B) supported by the UAV(s) generate soil composition data 146 indicative of a plurality of soil layers 258 below a surface 254 of the worksite, with the soil composition data 146 being received by the computing system 100 (e.g., comprised of computing device(s) 106, 110).

Further, at (304), the method 300 includes may include receiving data indicative of a surface profile of the surface of the worksite. For example, as indicated above, the UAV(s) 102 may be flown over the worksite such that the sensor(s) 104 (e.g., sensor(s) 104A) supported by the UAV(s) 102 may generate surface profile data 148 indicative of the surface profile of the surface 254 of the worksite, with the surface profile data 148 being received by the computing system 100 (e.g., by computing device(s) 106, 110).

Moreover, at (306), the method 300 includes receiving an input associated with a target profile of the worksite. For instance, as indicated above, the computing system 100 (e.g., computing device(s) 106, 110) may receive an input by an operator via a user interface (e.g., user interface 60) data 150 indicative of a target profile 256 of the worksite. However, the data 150 may be received from any other source, such as a separate database.

Additionally, at (308), the method 300 includes generating an earthmoving prescription map based at least in part on the plurality of soil layers of the worksite, the surface profile of the worksite, and the target profile of the worksite. For example, the computing system 100 (e.g., computing device(s) 106, 110) generates an earthmoving prescription map 250 based at least in part on the surface profile 254, the target profile 256, and the plurality of soil layers 258 of the worksite. The earthmoving prescription map 250 generally maps the plurality of soil layers 258 between the surface profile 254 and the target profile 256 of the worksite.

It is to be understood that the steps of the method 300 are performed by the computing system 100 upon loading and executing software code or instructions which are tangibly stored on a tangible computer readable medium, such as on a magnetic medium, e.g., a computer hard drive, an optical medium, e.g., an optical disk, solid-state memory, e.g., flash memory, or other storage media known in the art. Thus, any of the functionality performed by the computing system 100 described herein, such as the method 300, is implemented in software code or instructions which are tangibly stored on a tangible computer readable medium. The computing system 100 loads the software code or instructions via a direct interface with the computer readable medium or via a wired and/or wireless network. Upon loading and executing such software code or instructions by the computing system 100, the computing system 100 may perform any of the functionality of the computing system 100 described herein, including any steps of the method 300 described herein.

The term "software code" or "code" used herein refers to any instructions or set of instructions that influence the operation of a computer or computing system. They may exist in a computer-executable form, such as machine code, which is the set of instructions and data directly executed by a computer's central processing unit or by a computing system, a human-understandable form, such as source code, which may be compiled in order to be executed by a computer's central processing unit or by a computing system, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a computing system.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims.

## Claims

1. A method (300) for generating earthmoving prescriptions, the method (300) comprising:
receiving, with one or more computing devices (106, 110) of a computing system (100), data indicative of a plurality of soil layers (258) below a surface of a worksite, the plurality of soil layers (258) having different soil compositions, the data being generated by at least one sensor (104) supported on an unmanned aerial vehicle (UAV 102) that is configured to be flown across the worksite;
receiving, with the one or more computing devices (106, 110), data indicative of a surface profile (254) of the surface of the worksite;
receiving, with the one or more computing devices (106, 110), an input associated with a target profile (256) of the worksite; and
generating, with the one or more computing devices (106, 110), an earthmoving prescription map (250) based at least in part on the plurality of soil layers (258) of the worksite, the surface profile (254) of the worksite, and the target profile (256) of the worksite, the earthmoving prescription map (250) mapping the plurality of soil layers (258) between the surface profile (254) of the worksite and the target profile (256) of the worksite.

2. The method (300) as in claim 1, wherein receiving the data indicative of the surface profile (254) of the worksite comprises receiving the data indicative of the surface profile (254) of the worksite from the UAV (102).

3. The method (300) as in any preceding claim, further comprising automatically controlling the operation of the UAV (102) to perform one or more surface profile (254) passes across the worksite for generating the data indicative of the surface profile (254) of the worksite and one or more soil composition passes across the worksite for generating the data indicative of the plurality of soil layers (258) of the worksite.

4. The method (300) as in claim 3, wherein controlling the operation of the UAV (102) to perform the one or more surface profile (254) passes and the one or more soil composition passes comprises controlling the operation of the UAV (102) to perform the one or more surface profile (254) passes at a first height (D1) and controlling the operation of the UAV (102) to perform the one or more soil composition passes at a second height (D2), the first height (D1) differing from the second height (D2).

5. The method (300) as in claim 3, wherein controlling the operation of the UAV (102) to perform the one or more surface profile (254) passes and the one or more soil composition passes comprises controlling the operation of the UAV (102) to perform the one or more surface profile (254) passes at a first speed and controlling the operation of the UAV (102) to perform the one or more soil composition passes at a second speed, the first speed differing from the second speed.

6. The method (300) as in any preceding claim, further comprising:
determining, with the one or more computing devices (106, 110), an area-of-interest (264) within the worksite based at least in part on the data indicative of the plurality of soil layers (258) of the worksite;
controlling, with the one or more computing devices (106, 110), an operation of the UAV (102) to perform one or more passes across the area-of-interest (264) within the worksite for generating updated data indicative of a plurality of soil layers (258) of the area-of-interest (264) below the surface of the worksite; and
receiving, with the one or more computing devices (106, 110), the updated data indicative of the plurality of soil layers (258) of the area-of-interest (264),
wherein the earthmoving prescription map (250) is generated based at least in part on the surface profile (254) of the worksite, the target profile (256) of the worksite, the plurality of soil layers (258) of the worksite, and the updated data indicative of the plurality of soil layers (258) of the area-of-interest (264).

7. The method (300) as in claim 6, wherein determining the area-of-interest (264) comprises:
controlling, with the one or more computing devices (106, 110), a user interface (60) to display the data indicative of the plurality of soil layers (258) of the worksite below the surface of the worksite; and
receiving, with the one or more computing devices (106, 110), an input from an operator via a user interface (60) indicative of the area-of-interest (264).

8. The method (300) as in any preceding claim, further comprising transmitting the earthmoving prescription map (250) for the worksite to a work vehicle configured to perform an earthmoving operation within the worksite based on the earthmoving prescription map (250).

9. A system (100) for generating earthmoving prescriptions, comprising an unmanned aerial vehicle (UAV 102) configured to be flown across a worksite, the system comprising:
at least one sensor (104) supported on the UAV (102), the at least one sensor (104) being configured to generate data indicative of a surface profile (254) of a surface of the worksite and data indicative of a plurality of soil layers (258) below the surface of the worksite; and
a computing system (100) communicatively coupled to the at least one sensor (104), the computing system (100) being configured to:
receive, from the at least one sensor (104), the data indicative of the surface profile (254) of the worksite;
receive, from the at least one sensor (104), the data indicative of the plurality of soil layers (258) of the worksite;
receive an input associated with a target profile (256) of the worksite; and
generate an earthmoving prescription map (250) based at least in part on the plurality of soil layers (258) of the worksite, the surface profile (254) of the worksite, and the target profile (256) of the worksite, the earthmoving prescription map (250) mapping the plurality of soil layers (258) between the surface profile (254) of the worksite and the target profile (256) of the worksite.

10. The system (100) as in claim 9, wherein the computing system (100) is communicatively coupled to the UAV (102), the computing system (100) being further configured to control the operation of the UAV (102) to perform one or more surface profile (254) passes across the worksite for generating the data indicative of the surface profile (254) of the worksite and one or more soil composition passes across the worksite for generating the data indicative of the plurality of soil layers (258) of the worksite.

11. The system (100) as in claim 10, wherein the computing system (100) controls the operation of the UAV (102) to perform the one or more surface profile (254) passes at a first height (D1) and to perform the one or more soil composition passes at a second height (D2), the first height (D1) being different from the second height (D2).

12. The system (100) as in claim 10, wherein the computing system (100) controls the operation of the UAV (102) to perform the one or more surface profile (254) passes at a first speed and to perform the one or more soil composition passes at a second speed, the first speed being faster than the second speed.

13. The system (100) as in any preceding claim, wherein the computing system (100) is further configured to:
determine an area-of-interest (264) within the worksite based at least in part on the data indicative of the plurality of soil layers (258) of the worksite;
control an operation of the UAV (102) to perform one or more passes across the area-of-interest (264) within the worksite for generating updated data indicative of a plurality of soil layers (258) of the area-of-interest (264) below the surface of the worksite; and
receive the updated data indicative of the plurality of soil layers (258) of the area-of-interest (264),
wherein the earthmoving prescription map (250) is generated based at least in part on the surface profile (254) of the worksite, the target profile (256) of the worksite, the plurality of soil layers (258) of the worksite, and the updated data indicative of the plurality of soil layers (258) of the area-of-interest (264).

14. The system (100) as in any preceding claim, wherein the at least one sensor (104) comprises a first sensor (104A) and a second sensor (104B), the first sensor (104A) being configured to generate the data indicative of the surface profile (254) of the worksite, and the second sensor (104B) being configured to generate the data indicative of the plurality of soil layers (258) of the worksite.

15. The system (100) as in any preceding claim, wherein the at least one sensor (104) comprises a ground penetrating radar.

## Patentansprüche

1. Verfahren (300) zum Erzeugen von Erdbewegungsvorgaben, wobei das Verfahren (300) aufweist:
Empfangen, mit einer oder mehreren Verarbeitungseinrichtungen (106, 110) eines Verarbeitungssystems (100), von Daten, die kennzeichnend für eine Mehrzahl von Erdschichten (258) unter einer Oberfläche einer Arbeitsstätte sind, wobei die Mehrzahl von Erdschichten (258) unterschiedliche Bodenzusammensetzungen aufweist, wobei die Daten von mindestens einem an einem unbemannten Luftfahrzeug (UAV 102), das dazu eingerichtet ist, über die Arbeitsstätte geflogen zu werden, angebrachten Sensor (104) erzeugt werden,
Empfangen, mit der einen oder den mehreren Verarbeitungseinrichtungen (106, 110), von Daten, die kennzeichnend für ein Oberflächenprofil (254) der Oberfläche der Arbeitsstätte sind;
Empfangen, mit der einen oder den mehreren Verarbeitungseinrichtungen (106, 110), einer Eingabe, die zugehörig zu einem Vorgabeprofil (256) der Arbeitsstätte ist; und
Erzeugen, mit der einen oder den mehreren Verarbeitungseinrichtungen (106, 110), einer Erdbewegungsvorgabekarte (250) basierend auf zumindest teilweise der Mehrzahl von Erdschichten (258) der Arbeitsstätte, dem Oberflächenprofil (254) der Arbeitsstätte und dem Vorgabeprofil (256) der Arbeitsstätte, wobei die Erdbewegungsvorgabekarte (250) eine Gegenüberstellung der Mehrzahl von Erdschichten (258) zwischen dem Oberflächenprofil (254) der Arbeitsstätte und dem Vorgabeprofil (256) der Arbeitsstätte liefert.

2. Verfahren (300) nach Anspruch 1, wobei das Empfangen der Daten, die kennzeichnend für das Oberflächenprofil (254) der Arbeitsstätte sind, ein Empfangen der Daten, die kennzeichnend für das Oberflächenprofil (254) der Arbeitsstätte sind, von dem unbemannten Luftfahrzeug (102) aufweist.

3. Verfahren (300) nach einem der vorhergehenden Ansprüche, das des Weiteren ein automatisches Steuern des Betriebs des unbemannten Luftfahrzeugs (102) zum Ausführen von einem oder mehreren Oberflächenprofil- (254) Durchgängen über die Arbeitsstätte zum Erzeugen der Daten, die kennzeichnend für das Oberflächenprofil (254) der Arbeitsstätte sind, und zum Ausführen von einem oder mehreren Bodenzusammensetzungs-Durchgängen über die Arbeitsstätte zum Erzeugen der Daten, die kennzeichnend für eine Mehrzahl von Erdschichten (258) der Arbeitsstätte sind, aufweist.

4. Verfahren (300) nach Anspruch 3, wobei das Steuern des Betriebs des unbemannten Luftfahrzeugs (102) zum Ausführen des einen oder der mehreren Oberflächenprofil- (254) Durchgänge und des einen oder der mehreren Bodenzusammensetzungs-Durchgänge ein Steuern des Betriebs des unbemannten Luftfahrzeugs (102) zum Ausführen des einen oder der mehreren Oberflächenprofil-(254) Durchgänge in einer ersten Höhe (D1) und ein Steuern des Betriebs des unbemannten Luftfahrzeugs (102) zum Ausführen des einen oder der mehreren Bodenzusammensetzungs-Durchgänge in einer zweiten Höhe (D2) aufweist, wobei die erste Höhe (D1) sich von der zweiten Höhe (D2) unterscheidet.

5. Verfahren (300) nach Anspruch 3, wobei das Steuern des Betriebs des unbemannten Luftfahrzeugs (102) zum Ausführen des einen oder der mehreren Oberflächenprofil- (254) Durchgänge und des einen oder der mehreren Bodenzusammensetzungs-Durchgänge ein Steuern des Betriebs des unbemannten Luftfahrzeugs (102) zum Ausführen des einen oder der mehreren Oberflächenprofil- (254) Durchgänge in einer ersten Geschwindigkeit und ein Steuern des Betriebs des unbemannten Luftfahrzeugs (102) zum Ausführen des einen oder der mehreren Bodenzusammensetzungs-Durchgänge in einer zweiten Geschwindigkeit aufweist, wobei die erste Geschwindigkeit sich von der zweiten Geschwindigkeit unterscheidet.

6. Verfahren (300) nach einem der vorhergehenden Ansprüche, das des Weiteren die Schritte aufweist:
Bestimmen, mit der einen oder den mehreren Verarbeitungseinrichtungen (106, 110), eines Interessensgebiets (264) innerhalb der Arbeitsstätte basierend auf zumindest teilweise den Daten, die kennzeichnend für die Mehrzahl von Erdschichten (258) der Arbeitsstätte sind;
Steuern, mit der einen oder den mehreren Verarbeitungseinrichtungen (106, 110), eines Betriebs des unbemannten Luftfahrzeugs (102) zum Ausführen des einen oder der mehreren Durchgänge über dem Interessensgebiet (264) innerhalb der Arbeitsstätte zum Erzeugen von aktualisierten Daten, die kennzeichnend für eine Mehrzahl von Erdschichten (258) des Interessensgebiets (264) unter der Oberfläche der Arbeitsstätte sind; und
Empfangen, mit der einen oder den mehreren Verarbeitungseinrichtungen (106, 110), der aktualisierten Daten, die kennzeichnend für die Mehrzahl von Erdschichten (258) des Interessensgebiets (264) sind,
wobei die Erdbewegungsvorgabekarte (250) zumindest teilweise basierend auf dem Oberflächenprofil (254) der Arbeitsstätte, dem Vorgabeprofil (256) der Arbeitsstätte, der Mehrzahl von Erdschichten (258) der Arbeitsstätte und den aktualisierten Daten, die kennzeichnend für die Mehrzahl von Erdschichten (258) des Interessensgebiets (264) sind, erzeugt wird.

7. Verfahren (300) nach Anspruch 6, wobei das Bestimmen des Interessensgebiets (264) die Schritte aufweist:
Steuern, mit der einen oder den mehreren Verarbeitungseinrichtungen (106, 110), einer Nutzerschnittstelle (60) zum Anzeigen der Daten, die kennzeichnend für die Mehrzahl von Erdschichten (258) der Arbeitsstätte unter der Oberfläche der Arbeitsstätte sind; und
Empfangen, mit der einen oder den mehreren Verarbeitungseinrichtungen (106, 110), einer Eingabe, die kennzeichnend für das Interessensgebiet (264) ist, von einer Bedienperson über eine Nutzerschnittstelle (60).

8. Verfahren (300) nach einem der vorhergehenden Ansprüche, das des Weiteren ein Senden der Erdbewegungsvorgabekarte (250) für die Arbeitsstätte an ein Arbeitsfahrzeug aufweist, das dazu eingerichtet ist, eine Erdbewegungsarbeit innerhalb der Arbeitsstätte basierend auf der Erdbewegungsvorgabekarte (250) auszuführen.

9. System (100) zum Erzeugen von Erdbewegungsvorgaben, das ein unbemanntes Luftfahrzeug (UAV 102) aufweist, das dazu eingerichtet ist, über eine Arbeitsstätte geflogen zu werden, wobei das System aufweist:
mindestens einen an dem unbemannten Luftfahrzeug (102) angebrachten Sensor (104), wobei der mindestens eine Sensor (104) dazu eingerichtet ist, Daten, die kennzeichnend für ein Oberflächenprofil (254) einer Oberfläche der Arbeitsstätte sind, und Daten, die kennzeichnend für eine Mehrzahl von Erdschichten (258) unter der Oberfläche der Arbeitsstätte sind, zu erzeugen; und
ein Verarbeitungssystem (100), das kommunikativ mit dem mindestens einen Sensor (104) gekoppelt ist, wobei das Verarbeitungssystem (100) eingerichtet ist zum:
Empfangen der Daten von dem mindestens einen Sensor (104), die kennzeichnend für das Oberflächenprofil (254) der Arbeitsstätte sind;
Empfangen der Daten von dem mindestens einen Sensor (104), die kennzeichnend für die Mehrzahl von Erdschichten (258) der Arbeitsstätte sind;
Empfangen einer Eingabe, die zugehörig zu einem Vorgabeprofil (256) der Arbeitsstätte ist; und
Erzeugen einer Erdbewegungsvorgabekarte (250) basierend auf zumindest der Mehrzahl von Erdschichten (258) der Arbeitsstätte, dem Oberflächenprofil (254) der Arbeitsstätte und dem Vorgabeprofil (256) der Arbeitsstätte; wobei die Erdbewegungsvorgabekarte (250) eine Gegenüberstellung der Mehrzahl von Erdschichten (258) zwischen dem Oberflächenprofil (254) der Arbeitsstätte und dem Vorgabeprofil (256) der Arbeitsstätte liefert.

10. System (100) nach Anspruch 9, wobei das Verarbeitungssystem (100) kommunikativ mit dem unbemannten Luftfahrzeug (102) gekoppelt ist, wobei das Verarbeitungssystem (100) des Weiteren dazu eingerichtet ist, den Betrieb des unbemannten Luftfahrzeugs (102) zur Ausführung von einem oder mehreren Oberflächenprofil-(254) Durchgängen über die Arbeitsstätte zum Erzeugen der Daten, die kennzeichnend für das Oberflächenprofil (254) der Arbeitsstätte sind, und zur Ausführung von einem oder mehreren Bodenzusammensetzungs-Durchgängen über die Arbeitsstätte zum Erzeugen der Daten, die kennzeichnend für die Mehrzahl von Erdschichten (258) der Arbeitsstätte sind, zu steuern.

11. System (100) nach Anspruch 10, wobei das Verarbeitungssystem (100) den Betrieb des unbemannten Luftfahrzeugs (102) zur Ausführung des einen oder der mehreren Oberflächenprofil-(254) Durchgänge in einer ersten Höhe (D1) und zur Ausführung des einen oder der mehreren Bodenzusammensetzungs-Durchgänge in einer zweiten Höhe (D2) steuert, wobei die erste Höhe (D1) sich von der zweiten Höhe (D2) unterscheidet.

12. System (100) nach Anspruch 10, wobei das Verarbeitungssystem den Betrieb des unbemannten Luftfahrzeugs (102) zur Ausführung des einen oder der mehreren Oberflächenprofil-(254) Durchgänge in einer ersten Geschwindigkeit und zur Ausführung des einen oder der mehreren Bodenzusammensetzungs-Durchgänge in einer zweiten Geschwindigkeit steuert, wobei die erste Geschwindigkeit höher als die zweite Geschwindigkeit ist.

13. System (100) nach einem der vorhergehenden Ansprüche, wobei das Verarbeitungssystem (100) des Weiteren eingerichtet ist zum:
Bestimmen eines Interessensgebiets (264) innerhalb der Arbeitsstätte basierend auf zumindest teilweise den Daten, die kennzeichnend für die Mehrzahl von Erdschichten (258) der Arbeitsstätte sind;
Steuern eines Betriebs des unbemannten Luftfahrzeugs (102) zur Ausführung von einem oder mehreren Durchgängen über das Interessensgebiet (264) innerhalb der Arbeitsstätte zum Erzeugen von aktualisierten Daten, die kennzeichnend für eine Mehrzahl von Erdschichten (258) des Interessensgebiets (264) unter der Oberfläche der Arbeitsstätte sind; und
Empfangen der aktualisierten Daten, die kennzeichnend für die Mehrzahl von Erdschichten (258) des Interessensgebiets (264) sind,
wobei die Erdbewegungsvorgabekarte (250) basierend auf zumindest teilweise dem Oberflächenprofil (254) der Arbeitsstätte, dem Vorgabeprofil (256) der Arbeitsstätte, der Mehrzahl von Erdschichten (258) der Arbeitsstätte und den aktualisierten Daten, die kennzeichnend für die Mehrzahl von Erdschichten (258) des Interessensgebiets (264) sind, erzeugt wird.

14. System (100) nach einem der vorhergehenden Ansprüche, wobei der mindestens eine Sensor (104) einen ersten Sensor (104A) und einen zweiten Sensor (104B) aufweist, wobei der erste Sensor (104A) dazu eingerichtet ist, die Daten zu erzeugen, die kennzeichnend für das Oberflächenprofil (254) der Arbeitsstätte sind, und der zweite Sensor (104B) dazu eingerichtet ist, die Daten zu erzeugen, die kennzeichnend für die Mehrzahl von Erdschichten (258) der Arbeitsstätte sind.

15. System (100) nach einem der vorhergehenden Ansprüche, wobei der mindestens eine Sensor (104) ein Bodenradar aufweist.

## Revendications

1. Procédé (300) pour générer des prescriptions de terrassement, le procédé (300) comprenant les étapes consistant à :
recevoir, à l'aide d'un ou de plusieurs dispositifs informatiques (106, 110) d'un système informatique (100), des données indiquant une pluralité de couches de sol (258) sous une surface d'un chantier, la pluralité de couches de sol (258) ayant des compositions de sol différentes, les données étant générées par au moins un capteur (104) supporté par un véhicule aérien sans pilote (UAV 102) qui est configuré pour voler au-dessus du chantier ;
recevoir, à l'aide d'un ou de plusieurs dispositifs informatiques (106, 110), des données indiquant un profil de surface (254) de la surface du chantier ;
recevoir, à l'aide d'un ou de plusieurs dispositifs informatiques (106, 110), une entrée associée à un profil cible (256) du chantier ; et
générer, à l'aide d'un ou de plusieurs dispositifs informatiques (106, 110), une carte de prescription de terrassement (250) basée au moins en partie sur la pluralité de couches de sol (258) du chantier, le profil de surface (254) du chantier, et le profil cible (256) du chantier, la carte de prescription de terrassement (250) cartographiant la pluralité de couches de sol (258) entre le profil de surface (254) du chantier et le profil cible (256) du chantier.

2. Procédé (300) selon la revendication 1, dans lequel la réception des données indicatives du profil de surface (254) du chantier comprend la réception des données indicatives du profil de surface (254) du chantier à partir de l'UAV (102).

3. Procédé (300) selon l'une quelconque des revendications précédentes, comprenant en outre la commande automatique du fonctionnement de l'UAV (102) pour effectuer un ou plusieurs passages de profil de surface (254) au-dessus du chantier pour générer les données indicatives du profil de surface (254) du chantier et un ou plusieurs passages de composition du sol au-dessus du chantier pour générer les données indicatives de la pluralité de couches de sol (258) du chantier.

4. Procédé (300) selon la revendication 3, dans lequel la commande du fonctionnement de l'UAV (102) pour effectuer un ou plusieurs passages de profil de surface (254) et un ou plusieurs passages de composition du sol comprend la commande du fonctionnement de l'UAV (102) pour effectuer un ou plusieurs passages de profil de surface (254) à une première hauteur (DI) et la commande du fonctionnement de l'UAV (102) pour effectuer un ou plusieurs passages de composition du sol à une seconde hauteur (D2), la première hauteur (D1) étant différente de la seconde hauteur (D2).

5. Procédé (300) selon la revendication 3, dans lequel la commande du fonctionnement de l'UAV (102) pour effectuer un ou plusieurs passages de profil de surface (254) et un ou plusieurs passages de composition du sol comprend la commande du fonctionnement de l'UAV (102) pour effectuer un ou plusieurs passages de profil de surface (254) à une première vitesse et la commande du fonctionnement de l'UAV (102) pour effectuer un ou plusieurs passages de composition du sol à une seconde vitesse, la première vitesse étant différente de la seconde vitesse.

6. Procédé (300) selon l'une quelconque des revendications précédentes, comprenant en outre les étapes consistant à :
déterminer, à l'aide d'un ou de plusieurs dispositifs informatiques (106, 110), une zone d'intérêt (264) à l'intérieur du chantier en se basant au moins en partie sur les données indiquant la pluralité de couches de sol (258) du chantier ;
commander, à l'aide d'un ou de plusieurs dispositifs informatiques (106, 110), une opération de l'UAV (102) pour effectuer un ou plusieurs passages au-dessus de la zone d'intérêt (264) dans le chantier pour générer des données actualisées indiquant une pluralité de couches de sol (258) de la zone d'intérêt (264) sous la surface du chantier ; et
recevoir, à l'aide d'un ou de plusieurs dispositifs informatiques (106, 110), des données actualisées indiquant la pluralité de couches de sol (258) de la zone d'intérêt (264),
dans lequel la carte de prescription de terrassement (250) est générée au moins en partie sur la base du profil de surface (254) du chantier, du profil cible (256) du chantier, de la pluralité de couches de sol (258) du chantier, et des données actualisées indiquant la pluralité de couches de sol (258) de la zone d'intérêt (264).

7. Procédé (300) selon la revendication 6, dans lequel la détermination de la zone d'intérêt (264) comprend les étapes consistant à : commander, à l'aide d'un ou de plusieurs dispositifs informatiques (106, 110), une interface utilisateur (60) pour afficher les données indicatives de la pluralité de couches de sol (258) du chantier sous la surface du chantier ; et
recevoir, à l'aide d'un ou de plusieurs dispositifs informatiques (106, 110), une entrée d'un opérateur par l'intermédiaire d'une interface utilisateur (60) indiquant la zone d'intérêt (264).

8. Procédé (300) selon l'une quelconque des revendications
précédentes, comprenant en outre les étapes consistant à : transmettre la carte de prescription de terrassement (250) pour le chantier à un véhicule de travail configuré pour effectuer une opération de terrassement dans le chantier sur la base de la carte de prescription de terrassement (250).

9. Système (100) pour générer des prescriptions de terrassement, comprenant un véhicule aérien sans pilote (UAV 102) configuré pour voler au-dessus d'un chantier, le système comprenant :
au moins un capteur (104) supporté par l'UAV (102), l'au moins un capteur (104) étant configuré pour générer des données indiquant un profil de surface (254) d'une surface du chantier et des données indiquant une pluralité de couches de sol (258) sous la surface du chantier ; et
un système informatique (100) couplé de manière communicative à l'au moins un capteur (104), le système informatique (100) étant configuré pour :
recevoir, de l'au moins un capteur (104), les données indiquant le profil de surface (254) du chantier ;
recevoir, de l'au moins un capteur (104), les données indiquant la pluralité de couches de sol (258) du chantier ;
recevoir une entrée associée à un profil cible (256) du chantier ; et
générer une carte de prescription de terrassement (250) basée au moins en partie sur la pluralité de couches de sol (258) du chantier, le profil de surface (254) du chantier, et le profil cible (256) du chantier, la carte de prescription de terrassement (250) cartographiant la pluralité de couches de sol (258) entre le profil de surface (254) du chantier et le profil cible (256) du chantier.

10. Système (100) selon la revendication 9, dans lequel le système informatique (100) est couplé de manière communicative à l'UAV (102), le système informatique (100) étant en outre configuré pour commander le fonctionnement de l'UAV (102) afin d'effectuer un ou plusieurs passages du profil de surface (254) au-dessus du chantier pour générer les données indicatives du profil de surface (254) du chantier et un ou plusieurs passages de la composition du sol au-dessus du chantier pour générer les données indicatives de la pluralité de couches de sol (258) du chantier.

11. Système (100) selon la revendication 10, dans lequel le système informatique (100) commande le fonctionnement de l'UAV (102) pour effectuer un ou plusieurs passages du profil de surface (254) à une première hauteur (D1) et pour effectuer un ou plusieurs passages de la composition du sol à une seconde hauteur (D2), la première hauteur (D1) étant différente de la seconde hauteur (D2).

12. Système (100) selon la revendication 10, dans lequel le système informatique (100) commande le fonctionnement de l'UAV (102) pour effectuer un ou plusieurs passages de profil de surface (254) à une première vitesse et pour effectuer un ou plusieurs passages de composition du sol à une seconde vitesse, la première vitesse étant plus rapide que la seconde.

13. Système (100) selon l'une quelconque des revendications précédentes, dans lequel le système informatique (100) est en outre configuré pour :
déterminer une zone d'intérêt (264) à l'intérieur du chantier en se basant au moins en partie sur les données indiquant la pluralité de couches de sol (258) du chantier ;
commander une opération de l'UAV (102) pour effectuer un ou plusieurs passages au-dessus de la zone d'intérêt (264) à l'intérieur du chantier pour générer des données actualisées indiquant une pluralité de couches de sol (258) de la zone d'intérêt (264) sous la surface du chantier ; et
recevoir les données actualisées indiquant la pluralité de couches de sol (258) de la zone d'intérêt (264),
dans lequel la carte de prescription de terrassement (250) est générée au moins en partie sur la base du profil de surface (254) du chantier, du profil cible (256) du chantier, de la pluralité de couches de sol (258) du chantier, et des données actualisées indiquant la pluralité de couches de sol (258) de la zone d'intérêt (264).

14. Le système (100) selon l'une quelconque des revendications précédentes, dans lequel l'au moins un capteur (104) comprend un premier capteur (104A) et un second capteur (104B), le premier capteur (104A) étant configuré pour générer les données indicatives du profil de surface (254) du chantier, et le second capteur (104B) étant configuré pour générer les données indicatives de la pluralité de couches de sol (258) du chantier.

15. Système (100) selon l'une quelconque des revendications précédentes, dans lequel l'au moins un capteur (104) comprend un radar à pénétration de sol.
